# EUROPEAN PATENT SPECIFICATION

(11) **EP 1 142 320 B1**
(45) Date of publication and mention of the grant of the patent: **27.05.2009**
(21) Application number: 99964312.5
(22) Date of filing: 22.12.1999
(51) Int. Cl.: H04N 5/445

(54) **METHOD FOR OPERATING A VIDEO PROCESSING APPARATUS VIA AN ELECTRONIC MAIL MESSAGE**
ARBEITSVERFAHREN EINES VIDEOVERARBEITUNGSGERÄT ÜBER EINE E-MAIL NACHRICHT
PROCEDE PERMETTANT DE FAIRE FONCTIONNER UN APPAREIL DE TRAITEMENT DE SIGNAUX VIDEO VIA UN MESSAGE ELECTRONIQUE

(30) Priority: 28.12.1998 US 114076 P
(43) Date of publication of application: 10.10.2001
(73) Proprietor: Thomson Licensing, 92100 Boulogne-Billancourt (FR)
(72) Inventor: STUART, Anthony, Edward, Indianapolis, IN 46222-1375 (US); MORRISON, Hugh, Boyd, Indianapolis, IN 46250-2500 (US)
(74) Representative: Habasque, Etienne J. Jean-François
(86) International application number: PCT/US1999/030632
(87) International publication number: WO 2000/040014

(56) References cited:
- EP-A- 0 793 387
- WO-A-98/10589
- WO-A-98/26584
- US-A- 5 585 866

## Description

### FIELD OF INVENTION

This invention generally relates to a method for operating a video processing apparatus using an electronic mail message for providing control information.

### BACKGROUND OF INVENTION

Electronic Program Guides (EPGs) allow viewers to select any channel at any time during some period into the future, e.g., up to seven days forward. Once a particular program is selected, for example, by highlighting, the viewer can perform functions pertaining to that selected program. For instance, the viewer could instantly switch to that program if it is currently being aired. Viewers could also program one touch video cassette recording (VCR) or the like if the television is properly configured and connected to a recording device.

Although electronic program guides provide a convenient control interface, the use of EPGs is limited to situations where a user is present to view and interact with the EPG. There is consequently a need in the art for a convenient way to permit operation of a video processing apparatus remotely using an electronic mail message to provide the control information that is necessary for operating the apparatus.

In a PCT application, WO 98/10589, an architecture for remotely programming a device for recording is described. In one embodiment, the architecture allows the user to log on to a central processing system to request programming of a device. The system does not permit, however, a user to directly send a command in an ordinary email format to program the remote device for recording without first having to interact with a central site. In addition, EP-A-0793387 describes a television system having an email capability. This email system, however, does not allow a user to remotely program the television for selection of a channel or a television show.

Generally, the present invention defines a method for operating a video processing apparatus according to claim 1 and an apparatus according to claim 7. Other features of the invention are found in the dependent claims.

### BRIEF DESCRIPTION OF THE DRAWINGS

Fig. 1 shows an example of a television system in accordance with the present invention;
Fig. 2 shows an example of a digital video processing apparatus in accordance with the present invention;
Fig. 3 is a software flow chart in accordance with the present invention;
Fig. 4 shows an EPG menu according to an embodiment of the present invention; and
Fig. 5 shows an electronic message according to an implementation of the present invention.

### DETAILED DESCRIPTION

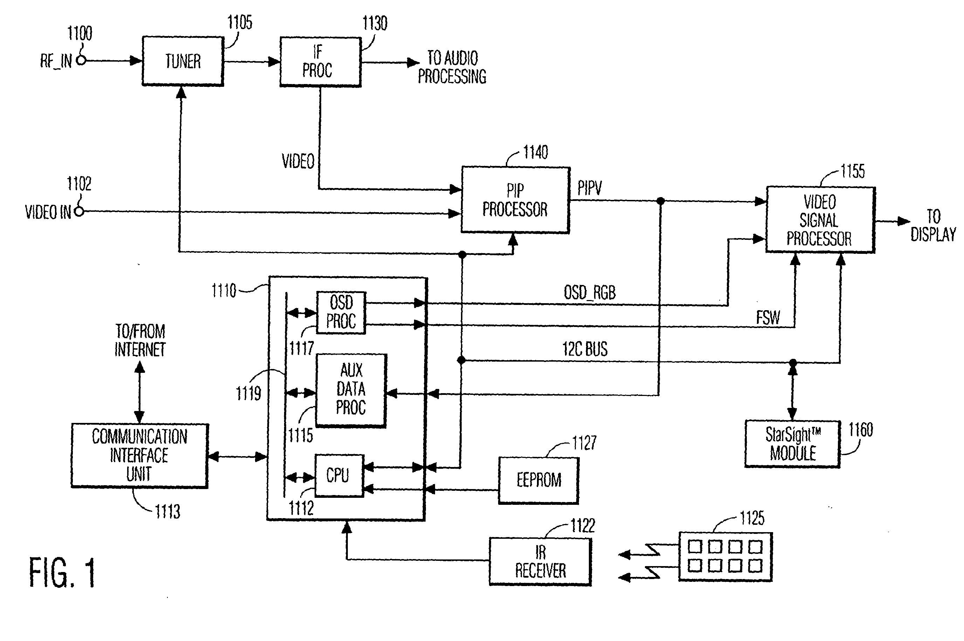

The television receiver shown in Fig. 1 is capable of processing both analog NTSC television signals and Internet information. Descriptions of the remaining well-known functions of the television receiver shown in Figure 1 are not provided except where necessary for understanding the present invention. Tuner 1105 and IF processor 1130 operate in a conventional manner for tuning and demodulating a particular television signal that is included in signal RF_IN. The system shown in FIG. 1 also includes a main microprocessor 1110 for controlling components of the television receiver such as tuner 1105, picture-in-picture processing unit 1140, video signal processor 1155, and Gemstar^{®} data processing module 1160.

Main microprocessor 1110 also controls the operation of a communications interface unit 1113 for providing the capability to upload and download information to and from the Internet. Communication interface unit 1113 includes, for example, a modem for connecting to an Internet service provider, e.g., via a telephone line or via a cable television line. The communication capability allows the system shown in Figure 1 to provide electronic message capability and Internet related features such as web browsing in addition to receiving television programming. CPU 1112 controls functions included within microprocessor 1110 , for example, auxiliary data processor 1115 and on-screen display (OSD) processor 1117. Auxiliary data processor 1115 extracts auxiliary data such as Gemstar^{®} data from video signal PIPV.

Gemstar^{®} data, which provides program guide data (e.g., EPG) information in a known format, is typically received only on a particular television channel and the television receiver must tune that channel to extract Gemstar^{®} data usually during a time period when the television receiver is typically not in use (e.g., 2:00 AM). At that time, CPU 1112 configures decoder 1115 such that auxiliary data is extracted from horizontal line intervals such as line 16 that are used for Gemstar^{®} data. For an EPG display, the display data included in the EPG display is produced by OSD processor 1117 and included in the output signal by VSP 1155 in response to fast switch signal FSW.

An exemplary embodiment of the features of the system shown in FIG. 1 that have been described thus far comprises an ST9296 microprocessor produced by SGS-Thomson Microelectronics; an M65616 picture-in-picture processor produced by Mitsubishi; and an LA7612 video signal processor produced by Sanyo.

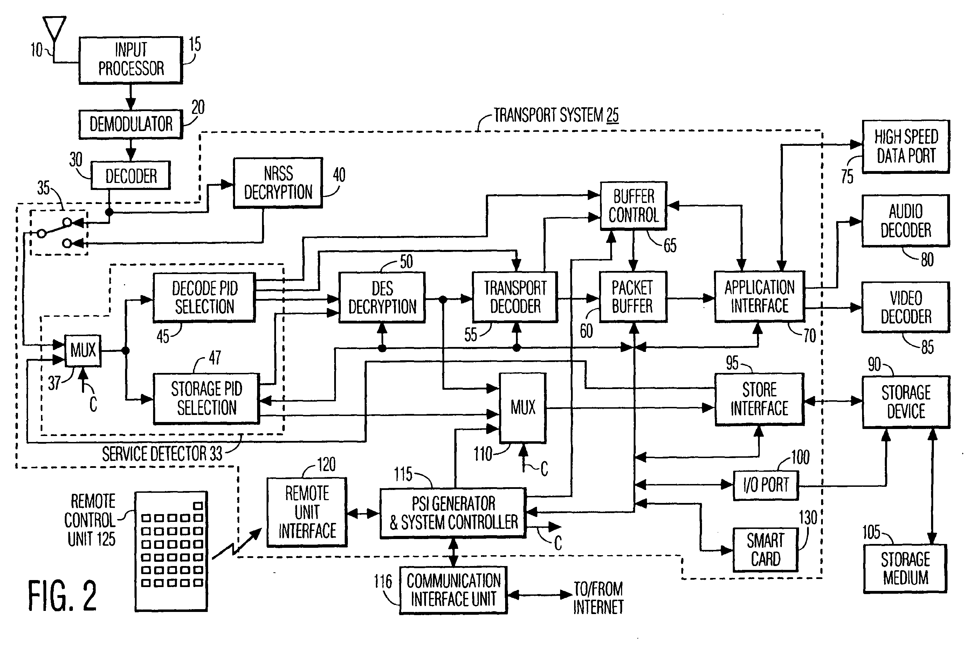

Figure 2 is an MPEG compatible system for receiving MPEG encoded transport streams representing broadcast programs and is also capable of processing Internet information, including electronic messages. User interface systems are also applicable to other types of digital signal processing devices including non-MPEG compatible systems, involving other types of encoded datastreams (e.g., digital video disc (DVD) systems). The exemplary system described below is described as processing broadcast programs. The term 'program' is used to represent any form of packetized data such as telephone messages, computer programs, Internet data, audio presentations (e.g., from a remote source or from a local source), visual presentations, audiovisual presentations (e.g., from a remote source or a local source), or other communications. Descriptions of the remaining well-known functions of the television receiver shown in Figure 2 are not provided except where necessary for understanding the present invention.

A carrier modulated with video data is received by antenna 10 and processed by input processor unit 15. The resultant digital output signal is demodulated by demodulator 20 and decoded by decoder 30. The output from decoder 30 is processed by transport system 25, which provides compressed data outputs for storage, further decoding, or communication to other devices. Video and audio decoders 85 and 80 respectively, decode the compressed data from system 25 to provide outputs for display.

The data provided to mux 37 from selector 35 is in the form of an MPEG compliant packetized transport datastream as defined in MPEG systems standard section 2.4 and includes program guide information and the data content of one or more program channels. Packet Identifiers (PIDs) identify the individual packets that comprise particular program channels. The transport stream contains Program Specific Information (PSI) for use in identifying the PIDs and assembling individual data packets to recover the content of all the program channels that comprise the packetized datastream. Transport system 25, under the control of the system controller 115, acquires and collates program guide information from the input transport stream, storage device 90 or an Internet service provider via the communication interface unit 116. The individual packets that comprise either particular program channel content or Program Guide information, are identified by their Packet Identifiers (PIDs) contained within header information

The user interface incorporated in the video receiver shown in Figure 2 enables a user to activate various features by selecting a desired feature from an on-screen display (OSD) menu, for example, an electronic program guide (EPG).

Packets received by decoder 55 from units 45 and 50 that contain program content including audio, video, caption, and other information, are directed by unit 65 from decoder 55 to the designated application device buffers in packet buffer 60. Application control unit 70 sequentially retrieves the audio, video, caption and other data from the designated buffers in buffer 60 and provides the data to audio and video decoders 80 and 85 and high speed data port 75.

In addition, controller 115 is coupled to a communication interface unit 116 that operates in a manner similar to interface unit 1113 of Figure 1. That is, unit 116 provides the capability to upload and download information to and from the Internet. Communication interface unit 116 includes, for example, a modem for connecting to an Internet service provider, e.g., via a telephone line or via a cable television line. The communication capability allows the system shown in Figure 2 to provide electronic message capability and Internet related features such as web browsing in addition to receiving television programming.

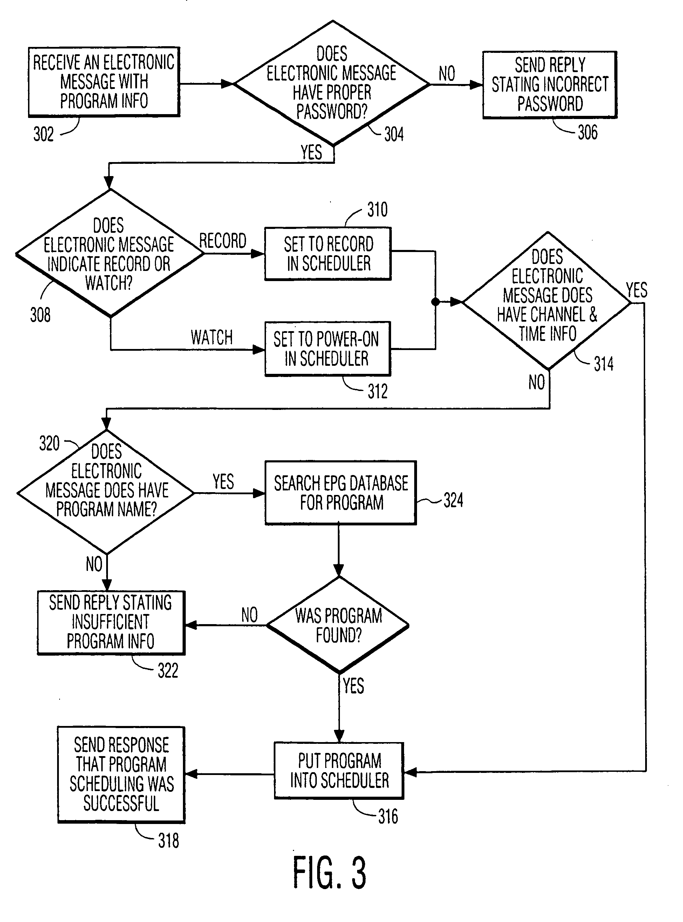

Fig. 3 is a software flow chart of an exemplary program which, according to the present invention, may be executed by controller 1110 of Fig. 1, controller 115 of Fig. 2, or any other suitably programmed control arrangement of an electronic host device. The term "electronic host device" as used herein is not limited to television receivers, video recording devices, digital video disks, or set-top boxes, but rather encompasses hybrids thereof (e.g., PCTVs), satellite television and/or data signal converters, program guide receiver units, and the like, regardless of whether incorporated into a television receiver or personal computer or connected externally thereto.

The exemplary program 300, when executed, facilitates processing of received electronic messages, as well as electronic linking of electronic messages to programming information. The exemplary program will be described below only with respect to the exemplary hardware implementation of an electronic host device shown in Fig. 1.

According to the exemplary program, the microprocessor 1110 initially executes program 300 in response to receiving an electronic message 302. Optional Steps 304 and 306 check for a proper password contained in or associated with the message and if not proper then microprocessor 1110 initiates the generation of an appropriate reply message. A determination of whether the electronic message pertains to setting up a future recording event or initiating an automatic turn-on of the device at a defined time is performed in Step 308. An appropriate timer in the "record" or "power-on" schedulers is initialized during Steps 310 and 312. At Step 314, the electronic message is checked to determine whether channel and time information is provided. If provided, the appropriate scheduler is programmed and a reply message is forwarded to the sender in Steps 316 and 318.

If the electronic message does not include channel and time information, then the message is searched, in Step 320, to determine whether any program information, such as, program name, is provided. If such information is not provided then microprocessor 1110 initiates the generation of an appropriate reply message in Step 322. If program information is provided, microprocessor 1110 initiates a search of the electronic program guide in Step 324 to determine all programs satisfying the criteria (program information). If a program is not located that satisfies the search criteria then an appropriate message is forwarded to the user at Step 322. If a program is located during Step 324, then the corresponding channel and time information is programmed into the appropriate scheduler in Step 316 and similarly, the user is notified in Step 318.

In accordance with the present invention, a user sends an electronic message to his/her video processing apparatus (e.g., television receiver). The electronic message encompasses traditional electronic mail (E-mail) messages, electronic instant messages (such as those available for AOL^{®} users). Additionally, this invention may encompass the use of telephony in conjunction with a caller-ID function as the vehicle for the message. The electronic message comprises control information for operating the video processing apparatus. The address of the television may be, for example, TV@RCA.com. The user assigns a unique password to the television, which can be used to verify the origin of the message. That is, to prevent the accidental control of another's television.

Now, by sending an electronic message to the television, a user can remotely control the television. For example, via an electronic message sent perhaps from the office, the user can "program" the television to turn-on and select a certain program at a desired time. That way, a user can program his television to turn-on and select the evening news at six o'clock so that upon entering his home the news will be on. Another example would be to permit a user to set up a recording event from a remote location. For example, if the user forgot to program his VCR prior to leaving his home then by sending an electronic message the user can set up the desired recording.

Such a recording may be achieved by either directly programming a timer in a recording device or by setting-up a "one-touch" recording in a television receiver. If the message is sent directly to a recording device, the message should include the necessary time and channel information that is required to program a timer. If the message is sent to the television receiver, or any other video processing apparatus that is capable of receiving and processing an electronic program guide, then the message may only contain program information, for example, the name of the program. In such a situation, the electronic program guide may be searched for a program that satisfies the criteria (i.e., the program information). The necessary time and channel information can be determined via the electronic program guide.

Requesting a recording may create a conflict with a pre-existing programmed event in a video recording apparatus. In such a situation, the latest event could take priority or a return message could be sent to the user advising of the conflict and providing the user an opportunity to resolve the conflict. The conflict could be resolved, perhaps, by overriding the pre-existing programmed event or by canceling the requested recording

The context of the message may include a password, channel number, start and stop times, date and tape speed. Using a consistent subject header, for example "RECORD", the video processing apparatus could determine whether a particular incoming electronic message contained control information. In addition, use of any consistent structure for the message, for example, a specific field which includes the word "RECORDING", could be utilized. Further, a dedicated web-site may be utilized to assist the user in constructing a proper message. An advantage of a dedicated web-site would be the ability to send a secure (i.e., encrypted) electronic message. This would remove the possibility of accidentally programming someone else's video processing apparatus. Further, a password may be used to verify that the message is from the user. That is, to avoid the possibility of responding to a message from someone not authorized.

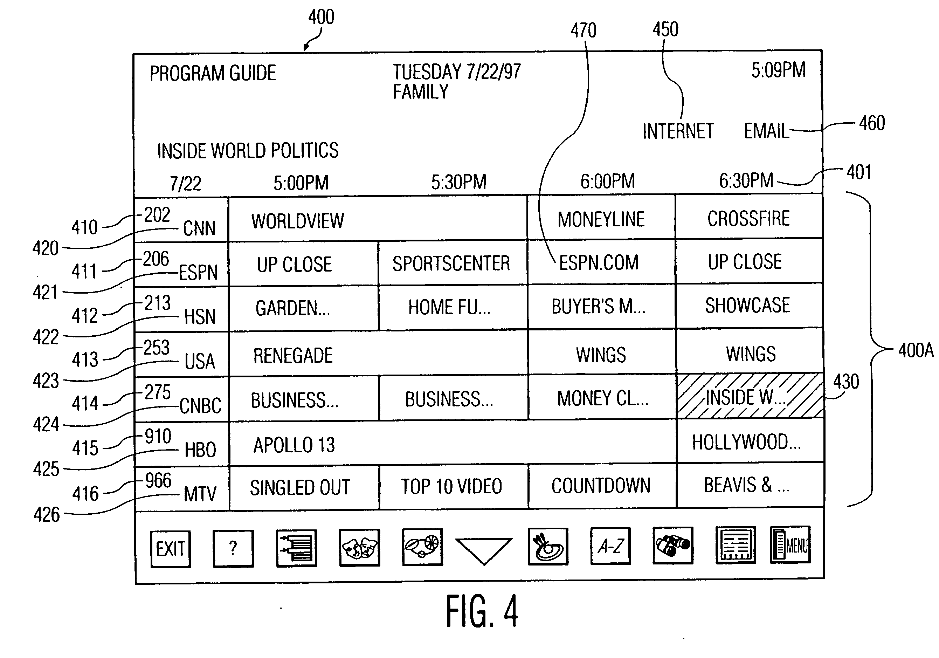

A typical EPG menu 400 is shown in Figure 4. The menu 400 includes a "grid guide" 400A which, shows a program schedule in a time-and-channel format, similar to a TV schedule listed in a newspaper. In the menu 400, each of the program identifiers (e.g., channel numbers 410-416, channel station names 420-426, web-site identifier 470, Internet identifier 450, electronic message identifier 460, and the like) is selectable by a user to implement respective ones of the programs. When the selected program identifier is associated with an audio program, video program, or audiovisual program, the controller 1110 responds by tuning the electronic host device or an associated receiver to the appropriate channel and by displaying and/or audibly broadcasting that program.

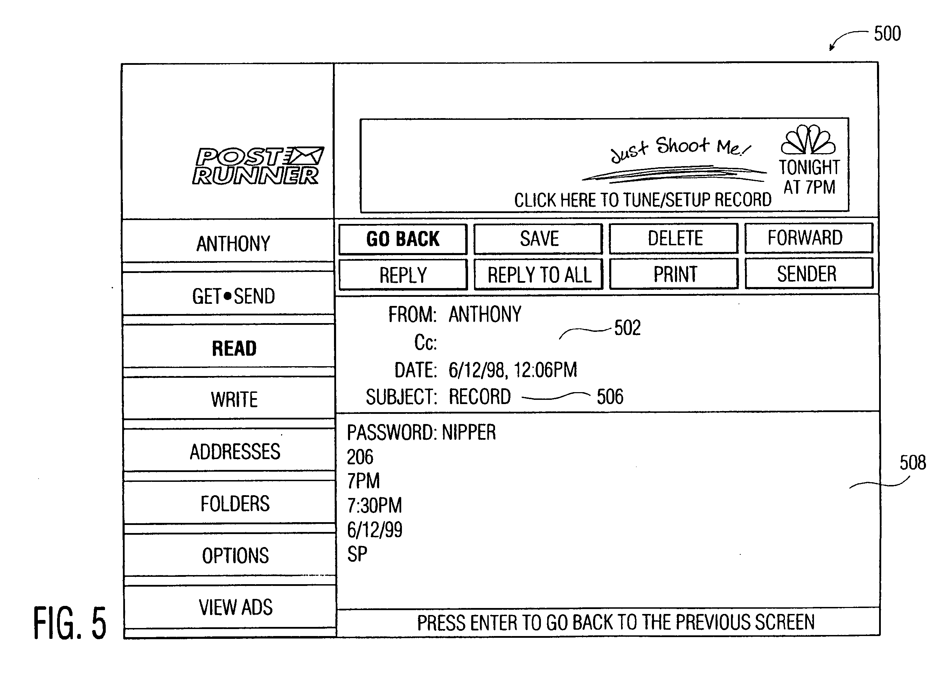

An electronic message display 500 is shown in Figure 5. The electronic message display 500 includes at least the following information: SENDER 502 , SUBJECT 506 (for identifying the type of message, i.e., RECORD), and a message portion 508. As described above, the message portion 508 may contain the time and channel information of a specific program or may contain program information.

The program information may merely be the name of the program or may include more detailed information, for example, program start time, program end time, program duration; the channel via which the program is transmitted, and characteristic information, and combinations thereof. Examples of the characteristic information include program title, program theme, program category, program keywords, a program description, program type (e.g. audio, video, audiovisual, computer, Internet, and the like), and program repeat frequency (e.g., once per week, daily, etc.).

Controller 1110, in the exemplary embodiment of Figure 1, receives the electronic message via communication interface 1113 from the Internet. Preferably, this message includes enough information about the program of interest that the intended action can be carried out.

The electronic message receiver and/or program-implementing device (e.g., a device of the type shown in Figures 1 and 2) responds to the received message by automatically tuning to that program if it is currently being aired, automatically tuning to the program in the future if it has yet to be aired and is scheduled for broadcast at a later time (e. g., by setting an appropriate timer or the like), or automatically recording of the program

As demonstrated above, the interface of the present invention is particularly well suited for use in connection with an electronic program guide (EPG). The electronic program guide (EPG) in this regard may constitute all or a portion of the menu 400.

Preferably, the television-encompassing version of the host device shown in Figure 1 is associated with a recording device (not shown) and the selector is actuatable to effect recording of the television program when the electronic message indicates that the user requests a recording.

While the present invention finds much usefulness in the realm of electronic host devices, which are connected to or defined by a television set, the present invention is not limited to such electronic host devices. The present invention may be implemented, for example, with a computer as the electronic host device. It is to be understood that the embodiments and variations shown and described herein are for illustrations only and that the scope of the present invention is limited only by the appended claims.

## Claims

1. A method for operating a video processing apparatus, comprising the steps of:
receiving (302) via the Internet a first electronic mail message remotely from a user, said first electronic mail message comprising an operating command and program identification information including at least one of a first type of program identification information representing channel and time information for said program and a second type of program identification information representing a name of said program;
processing (314) said first electronic mail message to determine whether said first electronic mail message includes said first type of program identification information;
scheduling (316) an event related to a program identified by said program identification information if said first electronic mail message includes said first type of program identification information;
processing (320) said first electronic mail message to determine whether said first electronic mail message includes said second type of program identification information if said first electronic mail message does not include said first type of program identification information;
searching (324) program guide information for said program if said first electronic mail message includes said second type of program identification information;
scheduling (316) said event if said program is found during said searching step ; and
sending a second electronic mail message from said video processing apparatus to said user if a conflict exists between said event and a preexisting timer event.

2. The method of claim 1, further **characterized by** a step of processing (308) said first electronic mail message to determine whether said operating command represents one of a request to record said program and a request to watch said program.

3. The method of claim 2, wherein:
said video processing apparatus is scheduled to record said program if said operating command represents said request to record said program (310); and
said video processing apparatus is scheduled to power on if said operating command represents said request to watch said program (312).

4. The method of claim 1, further **characterized by** a step of sending (322) a third electronic mail message from said video processing apparatus to said user if said program is not found during said searching step, said third electronic mail message indicating that said first electronic mail message included insufficient program identification information.

5. The method of claim 1, wherein said first electronic mail message further comprises a password and further comprising a step of sending (306) a third electronic mail message from said video processing apparatus to said user if said password is incorrect.

6. The method of claim 1, further **characterized by** a step of sending (318) a third electronic mail message from said video processing apparatus to said user if said event is scheduled.

7. A video processing apparatus comprising:
first means (1113) for receiving via the Internet a first electronic mail message remotely from a user, said first electronic mail message comprising an operating command and program identification information including at least one of a first type of program identification information representing channel and time information for said program and a second type of program identification information representing a name of said program;
second means (1110) for processing said first electronic mail message to determine whether said first electronic mail message includes said first type of program identification information, and for scheduling an event related to a program identified by said program identification information if said first electronic mail message includes said first type of program identification information;
said second means (1110) processing said first electronic mail message to determine whether said first electronic message includes said second type of program identification information if said first electronic mail message does not include said first type of program identification information;
said second means (1110) searching program guide information for said program if said first electronic mail message includes said second type of program identification information, and scheduling said event if said program is found during said searching; and
wherein a second electronic mail message is sent from said video processing apparatus to said user if a conflict exists between said event and a preexisting timer event.

8. The apparatus of claim 7, wherein said second means (1110) further processes said first electronic mail message to determine whether said operating command represents one of a request to record said program and a request to watch said program.

9. The apparatus of claim 8, wherein:
said apparatus is scheduled to record said program if said operating command represents said request to record said program; and
said apparatus is scheduled to power on if said operating command represents said request to watch said program.

10. The apparatus of claim 7, wherein a third electronic mail message is sent from said apparatus to said user if said program is not found during said searching, said third electronic mail message indicating that said first electronic mail message included insufficient program identification information.

11. The apparatus of claim 7, wherein said first electronic mail message further comprises a password and a third electronic mail message is sent from said apparatus to said user if said password is incorrect.

12. The apparatus of claim 7, wherein a third electronic mail message is sent from said apparatus to said user if said event is scheduled.

## Patentansprüche

1. Verfahren zum Bedienen einer Video-Verarbeitungseinrichtung, welches die Schritte aufweist:
Empfangen (302) einer ersten elektronischen Postnachricht über das Internet aus der Ferne von einem Nutzer, wobei die elektronische Postnachricht einen Bedienbefehl und eine Programm-Identifikationsinformation aufweist, die zumindest einen von einem ersten Typ von Programm-Identifikationsinformation, die Kanal und Zeit für das Programm repräsentiert, und einem zweiten Typ von Programm-Identifikationsinformation, die einen Namen des Programms repräsentiert, aufweist;
Verarbeiten (314) der ersten elektronischen Postnachricht, so dass bestimmt wird, ob die erste elektronische Postnachricht den ersten Typ der Programm-Identifikationsinformation aufweist;
Festlegen (316) eines Ereignisses, welches zu einem Programm gehört, das durch die Programm-Identifikationsinformation identifiziert wird, wenn die erste elektronische Postnachricht den ersten Typ von Programm-Identifikationsinformation aufweist;
Verarbeiten (320) der ersten elektronischen Postnachricht, so dass bestimmt wird, ob die erste elektronische Postnachricht den zweiten Typ von Programm-Identifikationsinformation aufweist, wenn die erste elektronische Postnachricht den ersten Typ von Programm-Identifikationsinformation nicht aufweist;
Suchen (324) von Programmführer-Information für das Programm, wenn die erste elektronische Nachricht den zweiten Typ von Programm-Identifikationsinformation aufweist;
Festlegen (316) des Ereignisses, wenn das Programm während des Suchschritts gefunden wurde; und
Senden einer zweiten elektronischen Postnachricht von der Video-Verarbeitungseinrichtung zu dem Nutzer, wenn es einen Konflikt zwischen dem Ereignis und einem bereits vorhandenen Zeitgeber-Ereignis gibt.

2. Verfahren gemäß Anspruch 1, ferner **gekennzeichnet durch** einen Schritt des Verarbeitens (308) der ersten elektronischen Postnachricht, so dass bestimmt wird, ob der Bedienbefehl eine von einer Aufforderung zum Aufzeichnen des Programms und einer Aufforderung zum Anschauen des Programms repräsentiert.

3. Verfahren gemäß Anspruch 2, wobei:
festgelegt wird, dass die Video-Verarbeitungseinrichtung das Programm aufzeichnet, wenn der Bedienbefehl die Aufforderung zum Aufzeichnen des Programms (310) repräsentiert; und
festgelegt wird, dass die Video-Verarbeitungseinrichtung einschaltet, wenn der Bedienbefehl die Aufforderung zum Anschauen des Programms (312) repräsentiert.

4. Verfahren gemäß Anspruch 1, ferner **gekennzeichnet durch** einen Schritt des Sendens (322) einer dritten elektronischen Postnachricht von der Video-Verarbeitungseinrichtung zu den Nutzer, wenn das Programm während des Suchschritts nicht gefunden wurde, wobei die dritte elektronische Postnachricht anzeigt, dass die erste elektronische Postnachricht unzureichende Programm-Identifikationsinformation aufwies.

5. Verfahren gemäß Anspruch 1, wobei die erste elektronische Postnachricht ferner ein Passwort aufweist, und ferner aufweisend einen Schritt des Sendens (306) einer dritten elektronischen Postnachricht von der Video-Verarbeitungseinrichtung zu dem Nutzer, wenn das Passwort nicht korrekt ist.

6. Verfahren gemäß Anspruch 1, ferner **gekennzeichnet durch** einen Schritt des Sendens (318) einer dritten elektronischen Postnachricht von der Video-Verarbeitungseinrichtung zu dem Nutzer, wenn das Ereignis festgelegt wurde.

7. Video-Verarbeitungseinrichtung, welche aufweist:
ein erstes Mittel (1113) zum Empfangen einer ersten elektronischen Postnachricht über das Internet aus der Ferne von einem Nutzer, wobei die erste elektronische Postnachricht einen Bedienbefehl und eine Programm-Identifikationsinformation aufweist, welche zumindest einen von einem ersten Typ von Programm-Identifikationsinformation, die Kanal und Zeitinformation für das Programm repräsentiert, und einem zweiten Typ von Programm-Identifikationsinformation, die einen Namen des Programms repräsentiert, aufweist;
ein zweites Mittel (1110) zum Verarbeiten der ersten elektronischen Postnachricht, so dass bestimmt wird, ob die erste elektronische Postnachricht den ersten Typ von Programm-Identifikationsinformation aufweist, und zum Festlegen eines Ereignisses, welches zu einem Programm gehört, das durch die Programm-Identifikationsinformation identifiziert wird, wenn die erste elektronische Postnachricht den ersten Typ von Programm-Identifikationsinformation aufweist;
wobei das zweite Mittel (1110) die erste elektronische Postnachricht verarbeitet, so dass bestimmt wird, ob die erste elektronische Postnachricht den zweiten Typ von Programm-Identifikationsinformation aufweist, wenn die erste elektronische Postnachricht den ersten Typ von Programm-Identifikationsinformation nicht aufweist;
wobei das zweite Mittel (1110) Programmführer-Information für das Programm sucht, wenn die erste elektronische Postnachricht den zweiten Typ von Programm-Identifikationsinformation aufweist, und das Ereignis festlegt, wenn das Programm während des Suchens gefunden wurde; und
wobei eine zweite elektronische Postnachricht von der Video-Verarbeitungseinrichtung zu dem Nutzer gesendet wird, wenn es einen Konflikt zwischen dem Ereignis und einem bereits vorhandenen Zeitgeber-Ereignis gibt.

8. Einrichtung gemäß Anspruch 7, wobei das zweite Mittel (1110) ferner die erste elektronische Postnachricht verarbeitet, so dass bestimmt wird, ob der Bedienbefehl eine von einer Aufforderung zum Aufzeichnen des Programms und einer Aufforderung zum Anschauen des Programms repräsentiert.

9. Einrichtung gemäß Anspruch 8, wobei:
festgelegt wird, dass die Einrichtung das Programm aufzeichnet, wenn der Bedienbefehl die Aufforderung zum Aufzeichnen des Programms repräsentiert; und
festgelegt wird, dass die Einrichtung einschaltet, wenn der Bedienbefehl die Aufforderung zum Anschauen des Programms repräsentiert.

10. Einrichtung gemäß Anspruch 7, wobei eine dritte elektronische Postnachricht von der Einrichtung zu dem Nutzer gesendet wird, wenn das Programm während des Suchens nicht gefunden wurde, wobei die dritte elektronische Postnachricht anzeigt, dass die erste elektronische Postnachricht unzureichende Programm-Identifikationsinformation aufwies.

11. Einrichtung gemäß Anspruch 7, wobei die erste elektronische Postnachricht ferner ein Passwort aufweist und eine dritte elektronische Postnachricht von der Einrichtung zu dem Nutzer gesendet wird, wenn das Passwort nicht korrekt ist.

12. Einrichtung gemäß Anspruch 7, wobei eine dritte elektronische Nachricht von der Einrichtung zu dem Nutzer gesendet wird, wenn das Ereignis festgelegt wurde.

## Revendications

1. Procédé permettant de faire fonctionner un appareil de traitement vidéo, comprenant les étapes de :
réception (302) par l'intermédiaire d'Internet d'un premier message de courrier électronique à distance d'un utilisateur, ledit premier message de courrier électronique comprenant une commande de fonctionnement et des informations d'identification de programme comprenant au moins l'un d'un premier type d'informations d'identification de programme représentant des informations de chaîne et d'heure pour ledit programme et d'un deuxième type d'informations d'identification de programme représentant un nom dudit programme ;
traitement (314) dudit premier message de courrier électronique pour déterminer si ledit premier message de courrier électronique comprend ledit premier type d'informations d'identification de programme ;
programmation (316) d'un événement lié à un programme identifié par lesdites informations d'identification de programme si ledit premier message de courrier électronique comprend ledit premier type d'informations d'identification de programme ;
traitement (320) dudit premier message de courrier électronique pour déterminer si ledit premier message de courrier électronique comprend ledit deuxième type d'informations d'identification de programme dans le cas où ledit premier message de courrier électronique ne comprend pas ledit premier type d'informations d'identification de programme ;
recherche (324) d'informations de guide de programmes pour ledit programme si ledit premier message de courrier électronique comprend ledit deuxième type d'informations d'identification de programme ;
programmation (316) dudit événement si ledit programme est trouvé au cours de ladite étape de recherche ; et
envoi d'un deuxième message de courrier électronique dudit appareil de traitement de signaux vidéo audit utilisateur s'il existe un conflit entre ledit événement et un événement de temporisation préexistant.

2. Procédé selon la revendication 1, **caractérisé en outre par** une étape de traitement (308) dudit premier message de courrier électronique pour déterminer si ladite commande de fonctionnement représente l'une d'une requête pour enregistrer ledit programme et d'une requête pour regarder ledit programme.

3. Procédé selon la revendication 2, dans lequel :
ledit appareil de traitement vidéo est programmé pour enregistrer ledit programme si ladite commande de fonctionnement représente ladite requête pour enregistrer ledit programme (310) ; et
ledit appareil de traitement vidéo est programmé pour se mettre sous tension si ladite commande de fonctionnement représente ladite requête pour regarder ledit programme (312).

4. Procédé selon la revendication 1, **caractérisé en outre par** une étape d'envoi (322) d'un troisième message de courrier électronique dudit appareil de traitement vidéo audit utilisateur si ledit programme n'est pas trouvé au cours de ladite étape de recherche, ledit troisième message de courrier électronique indiquant que ledit premier message de courrier électronique comprenait des informations d'identification de programme insuffisantes.

5. Procédé selon la revendication 1, dans lequel ledit premier message de courrier électronique comprend en outre un mot de passe et comprenant en outre une étape d'envoi (306) d'un troisième message de courrier électronique dudit appareil de traitement vidéo audit utilisateur si ledit mot de passe est incorrect.

6. Procédé selon la revendication 1, **caractérisé en outre par** une étape d'envoi (318) d'un troisième message de courrier électronique dudit appareil de traitement vidéo audit utilisateur si ledit événement est programmé.

7. Appareil de traitement vidéo, comprenant :
des premiers moyens (1113) pour recevoir par l'intermédiaire d'Internet un premier message de courrier électronique à distance d'un utilisateur, ledit premier message de courrier électronique comprenant une commande de fonctionnement et des informations d'identification de programme comprenant au moins l'un d'un premier type d'informations d'identification de programme représentant des informations de chaîne et d'heure pour ledit programme et d'un deuxième type d'informations d'identification de programme représentant un nom dudit programme;
des deuxièmes moyens (1110) pour traiter ledit premier message de courrier électronique pour déterminer si ledit premier message de courrier électronique comprend ledit premier type d'informations d'identification de programme, et pour programmer un événement lié à un programme identifié par lesdites informations d'identification de programme si ledit premier message de courrier électronique comprend ledit premier type d'informations d'identification de programme;
lesdits deuxièmes moyens (1110) traitant ledit premier message de courrier électronique pour déterminer si ledit premier message de courrier électronique comprend ledit deuxième type d'informations d'identification de programme dans le cas où ledit premier message de courrier électronique ne comprend pas ledit premier type d'informations d'identification de programme;
lesdits deuxièmes moyens (1110) cherchant des informations de guide de programme pour ledit programme si ledit premier message de courrier électronique comprend ledit deuxième type d'informations d'identification de programme, et programmant ledit événement si ledit programme est trouvé au cours de ladite recherche ; et
dans lequel un deuxième message de courrier électronique est envoyé dudit appareil de traitement vidéo audit utilisateur s'il existe un conflit entre ledit événement et un événement de temporisation préexistant.

8. Appareil selon la revendication 7, dans lequel lesdits deuxièmes moyens (1110) traitent en outre ledit premier message de courrier électronique pour déterminer si ladite commande de fonctionnement représente l'une d'une requête pour enregistrer ledit programme et d'une requête pour regarder ledit programme.

9. Appareil selon la revendication 8, dans lequel :
ledit appareil est programmé pour enregistrer ledit programme si ladite commande de fonctionnement représente ladite requête pour enregistrer ledit programme; et
ledit appareil est programmé pour se mettre sous tension si ladite commande de fonctionnement représente ledit programme pour regarder ledit programme.

10. Appareil selon la revendication 7, dans lequel un troisième message de courrier électronique est envoyé dudit appareil audit utilisateur si ledit programme n'est pas trouvé au cours de ladite recherche, ledit troisième message de courrier électronique indiquant que ledit premier message de courrier électronique comprenait des informations d'identification de programme insuffisantes.

11. Appareil selon la revendication 7, dans lequel ledit premier message de courrier électronique comprend en outre un mot de passe et un troisième message de courrier électronique est envoyé dudit appareil audit utilisateur si ledit mot de passe est incorrect.

12. Appareil selon la revendication 7, dans lequel un troisième message de courrier électronique est envoyé dudit appareil audit utilisateur si ledit événement est programmé.
